# EUROPEAN PATENT APPLICATION

(11) **EP 2 672 702 A1**
(43) Date of publication of application: **11.12.2013**
(21) Application number: 12781695.7
(22) Date of filing: 10.05.2012
(51) Int. Cl.: H04N 5/63, H04N 7/173

(54) **REPRODUCTION DEVICE, REPRODUCTION METHOD, AND RECORDING MEDIUM**

(30) Priority: 12.05.2011 JP 2011107403
(71) Applicant: NEC CASIO Mobile Communications, Ltd., Kawasaki-shi Kanagawa 211-8666 (JP)
(72) Inventor: UNO Hiroyuki, Kawasaki-shi, Kanagawa 211-8666 (JP)
(74) Representative: Vossius & Partner
(86) International application number: PCT/JP2012/061971
(87) International publication number: WO 2012/153801

(57) **Abstract**

Reproducers (9, 27, 31) reproduce content. Time acquirers (10, 28, 32) acquire program segment times (t4, t5). If the segment time (t4) acquired by the time acquirers (10,28,32) is within a set time (M) extending from a first time (ta) to a second time (tb) based on a timer setting, timer controllers (11,29,33) commence processing for ending the reproduction carried out by the reproducers (9, 27, 31) at the segment time (t4), respectively.

## Description

### Technical Field

The present invention relates to a reproduction device for reproducing content, a reproduction method, and a recording medium.

### Background Art

Over recent years, reproduction devices such as mobile terminals and the like capable of reproducing content and the like have been multi-functionalized and reduced in size and weight. Therefore, since the reproduction devices have a limitation on a capacity of a cell and others, it has been desirable to reduce their power consumption. As one option for reducing power consumption, a function for automatically stopping an operation at a predetermined time, a so-called off-timer function, is being used (see, for example, Patent Literature 1). The television receiver disclosed in Patent Literature 1 analyzes a time zone of television viewing by the user and controls power-off upon deviation from this time zone. In addition, when a power-off time has passed during viewing of a program, this television receiver is powered off after termination of the program. Therefore, in the television receiver, the user is able to comfortably enjoy program viewing since the program viewing is not interrupted in the middle.

### Citation List

### Patent Literature

Patent Literature 1: Unexamined Japanese Patent Application Kokai Publication No. 2004-349946.

### Summary of Invention

### Technical Problem

However, in the case where a power-off time has passed during viewing of a program, even when the user is not viewing the program due to sleeping, the television receiver described in Patent Literature 1 mentioned above is not powered off until the program ends, resulting in a waste of power consumption during the aforementioned period of time.

In view of the circumstances, the present invention has been completed, and an objective of the present invention is to provide a reproduction device capable of further reducing power consumption without causing discomfort to the user, a reproduction method, and a recording medium.

### Solution to Problem

To achieve the objective, a reproduction device according to a first aspect of the present invention includes:
a reproducer for reproducing content;
a time acquirer for acquiring a segment time of the content; and
a timer controller for commencing processing for ending the reproduction carried out by the reproducer at the segment time acquired by the time acquirer if the segment time is within a set time extending from a first time to a second time based on a timer setting.

Further, a reproduction method according to a second aspect of the present invention includes:
a reproduction step of reproducing content;
a time acquisition step of acquiring a segment time of the content; and
a timer control step of commencing processing for ending the reproduction carried out in the reproduction step at the segment time acquired in the time acquisition step if the segment time is within a set time extending from a first time to a second time based on a timer setting.

Still further, a computer readable recording medium according to a third aspect of the present invention records a program for causing
a computer to function as:
a reproducer for reproducing content;
a time acquirer for acquiring a segment time of the content; and
a timer controller for commencing processing for ending the reproduction carried out by the reproducer at the segment time acquired by the time acquirer if the segment time is within a set time extending from a first time to a second time based on a timer setting.

### Advantageous Effects of Invention

According to the present invention, since the reproduction of content does not end in the middle and the reproduction ends earlier than a set time, it is possible to further reduce power consumption without causing discomfort to the user.

### Brief Description of Drawings

FIG. 1 is a block diagram illustrating a configuration of a reproduction device according to embodiment 1;
FIG. 2A is a chart (chart 1) illustrating a time sequence of content reproduced in embodiment 1; FIG. 2B is a chart (chart 2) illustrating a time sequence of content reproduced in embodiment 1; FIG. 2C is a chart (chart 3) illustrating a time sequence of content reproduced in embodiment 1;
FIG. 3 is a view illustrating one example of a confirmation screen reproduced by the reproduction device of FIG. 1;
FIG. 4 is a flowchart of timer control processing in embodiments 1 and 2;
FIG. 5 is a flowchart of setting of a processing start time in embodiments 1 and 2;
FIG. 6 is a flowchart of reproduction end processing in embodiments 1 and 2;
FIG. 7 is a block diagram illustrating a configuration of a reproduction device according to embodiment 2;
FIG. 8 is a chart illustrating a time sequence of music reproduced in embodiment 2;
FIG. 9 is a block diagram illustrating a configuration of a reproduction device according to embodiment 3; and
FIG. 10 is a flowchart of timer control processing in embodiment 3.

### Description of Embodiments

### (Embodiment 1)

Embodiments of the present invention will now be described in detail with reference to the drawings. A reproduction device 100 according to embodiment 1 is a device capable of enjoying a one segment portion reception service (hereinafter, referred to simply as "One Seg") for cellular phones and mobile terminals. One Seg is digital terrestrial television broadcasting mainly targeted at mobile stations such as mobile terminals and others for reception. The reproduction device 100 receives a television broadcast signal delivered from a broadcast station. The reproduction device 100 reproduces a program, a commercial message (hereinafter, referred to simply as "a CM"), and others as content based on a received television broadcast signal. Further, the reproduction device 100 receives a data broadcast signal delivered from the broadcast station other than the television broadcast signal. This data broadcast signal includes EPG (Electric Program Guide) data and others containing program information such as broadcast station names, program titles, program start times, program end times, and the like.

The reproduction device 100 includes a timer function. When the user inputs a set time to the reproduction device 100, the reproduction device 100 ends the reproduction of content at a time after the elapse of the set time (a second time; hereinafter, referred to simply as "a timer expiration time") from an input time (a first time; hereinafter, referred to simply as "a timer start time"). For example, the user sets a timer when sleepiness is present during viewing of a program. When this is done, the reproduction device 100 ends the reproduction of the program at a timer expiration time even when the user has slept while reproducing the program, resulting in prevention of useless reproduction of the program for a long period of time.

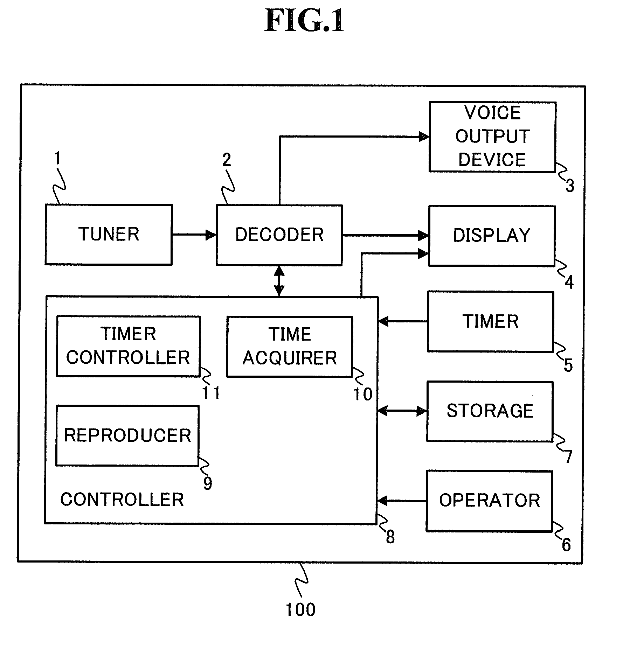

With reference to FIG. 1, a configuration of the reproduction device 100 according to the present embodiment will be described below. The reproduction device 100 includes a tuner 1, a decoder 2, a voice output device 3, a display 4, a timer 5, an operator 6, a storage 7, and a controller 8.

The tuner 1 receives, via an antenna (not illustrated), a television broadcast signal and others delivered from a broadcast station (not illustrated). The decoder 2 demodulates a television broadcast signal received in the tuner 1 to image/voice signals. The decoder 2 outputs a voice signal and an image signal each to the voice output device 3 and the display 4. The decoder 2 extracts a broadcast station name, a program title, a program start time, and a program end time from EPG data included in a data broadcast signal received in the tuner 1 to be output to the controller 8.

The voice output device 3 includes, for example, a speaker (not illustrated). The voice output device 3 outputs a voice from the speaker based on a voice signal demodulated in the decoder 2.

The display 4 includes, for example, a liquid crystal display (not illustrated). The display 4 displays an image on the liquid crystal display based on an image signal demodulated in the decoder 2 or data output from the controller 8.

The timer 5 carries out time-keeping. The timer 5 outputs a time acquired by time-keeping to the controller 8.

The operator 6 includes, for example, a key button and a switch button (each not illustrated). The operator 6 outputs an operation input signal corresponding to an operation input by the user to the controller 8. The operation input signal includes signals corresponding to, for example, power-on/off of the reproduction device 100, setting of a set time in the off-timer function, a change in sound volume, a change in image quality, and a channel change. Herein, it is also possible that the operator 6 includes a remote controller (hereinafter, referred to simply as a "remote control") signal receiver (not illustrated) so as for the user to perform a remote-control operation using a remote control (not illustrated).

The storage 7 includes a readable and writable memory (not illustrated) such as a ROM (Read Only Memory), a RAM (Random Access Memory), and the like. The storage 7 stores various programs and data. The storage 7 stores a program listing database produced based on program information included in the EPG data.

The controller 8 includes a CPU (Central Processing Unit, not illustrated), and totally controls the reproduction device 100 and executes each processing described below via execution, using the CPU, of various types of programs stored in the storage 7. The controller 8 executes each of the following processings based on a time output from the timer 5.

The controller 8 produces a program listing database based on program information. The controller 8 causes the storage 7 to store a produced program listing database.

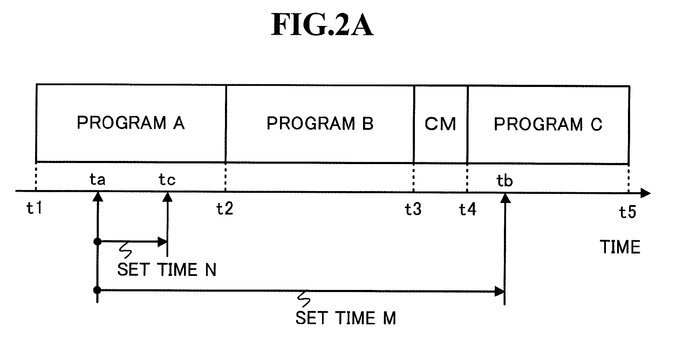

The controller 8 includes a reproducer 9, a time acquirer 10, and a timer controller 11. The reproducer 9 reproduces content. More specifically, the reproducer 9 controls the decoder 2, the voice output device 3, and the display 4 to reproduce a program and a CM delivered from a broadcast station. Further, the reproducer 9 detects a segment of content. More specifically, the reproducer 9 analyzes a television broadcast signal received via the tuner 1 and detects a segment of content. Refer to FIG. 2A. The reproducer 9 detects segments at times t1, t2, t3, t4, and t5. Upon detecting a segment, the reproducer 9 notifies the timer controller 11 of a segment detected time.

The time acquirer 10 acquires a segment time of content. The segment time of content refers to, for example, a start time and an end time of a program. As illustrated in FIG. 2A, for example, there is taken into consideration a case in which a program A from a time t1 to a time t2, a program B from a time t2 to a time t3, and a program C from a time t4 to a time t5 are delivered and then a CM is delivered between the program B and the program C from a broadcast station. The time acquirer 10 has searchability in a program listing database stored in the storage 7 and acquires t1 to t5.

If a segment time acquired by the time acquirer 10 is within a set time extending from a timer start time to a timer expiration time based on a timer setting, the timer controller 11 commences processing for ending the reproduction carried out by the reproducer 9 at the segment time. More specifically, if a plurality of segment times acquired by the time acquirer 10 are within a set time, the timer controller 11 commences processing for ending the reproduction carried out by the reproducer 9 at a segment time immediately prior to the timer expiration time. Further, unless a segment time acquired by the time acquirer 10 is within a set time, the timer controller 11 commences processing for ending the reproduction carried out by the reproducer 9 at a segment time immediately after the timer expiration time.

It is assumed that as illustrated in FIG. 2A, for example, the user has set a set time M (ta - tb) at a time ta (a timer start time) during viewing of a program A. The timer controller 11 notifies the time acquirer 10 of a timer expiration time tb specified by the set time M. In response thereto, the time acquirer 10 acquires segment times t4 and t5 of a program C delivered at the timer expiration time tb and notifies the timer controller 11 of the times. However, in the case where the timer expiration time tb and a segment time accord with each other, since the timer expires at the segment time and then the reproduction carried out by the reproducer 9 ends, the time acquirer 10 does not need to notify the timer controller 11 of the segment time.

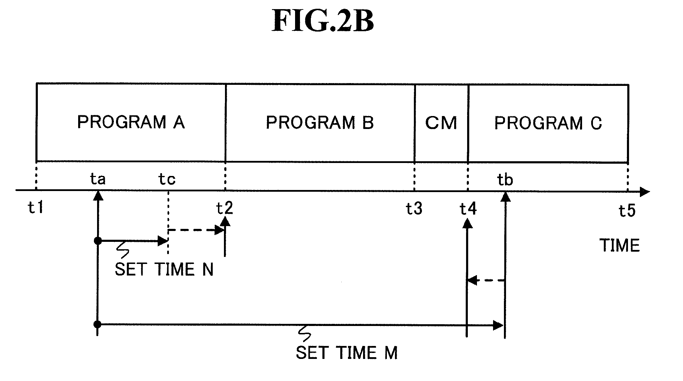

Since the segment time t4 is within the set time M, as illustrated in FIG. 2B, the timer controller 11 sets a processing start time for commencing processing for ending the reproduction carried out by the reproducer 9 to be the segment time t4 immediately prior to the timer expiration time tb. As a result, processing for ending the reproduction carried out by the reproducer 9 is commenced at the processing start time t4 earlier than the timer expiration time tb.

On the other hand, as illustrated in FIG. 2A, when the user has set a set time N (ta - tc), the timer controller 11 notifies the time acquirer 10 of a timer expiration time tc. The time acquirer 10 notifies the timer controller 11 of segment times t1 and t2 in the reproduction of a program A delivered at the timer expiration time tc. Since the segment times are not within the set time N, the timer controller 11 sets a processing start time to be the segment time t2 immediately after the timer expiration time tc as illustrated in FIG. 2B. As a result, processing for ending the reproduction carried out by the reproducer 9 is commenced at the processing start time t2 later than the timer expiration time tc.

The commencement of processing for ending reproduction will be described in detail. When a segment time is notified from the reproducer 9, then the timer controller 11 confirms whether the thus-notified segment time accords with a processing start time. When the notified segment time accords with the processing start time, the timer controller 11 issues instructions on processing for ending reproduction in response to the notification of the reproducer 9.

When end processing has been commenced at a segment time within a set time, the timer controller 11 reproduces information for ending the reproduction of content together with the content and then ends the reproduction carried out by the reproducer 9 if an operation input for ending the reproduction of the content is made. On the other hand, after information for ending the reproduction of the content has been reproduced, the timer controller 11 ends the reproduction carried out by the reproducer 9 unless an operation input is made within a predetermined time.

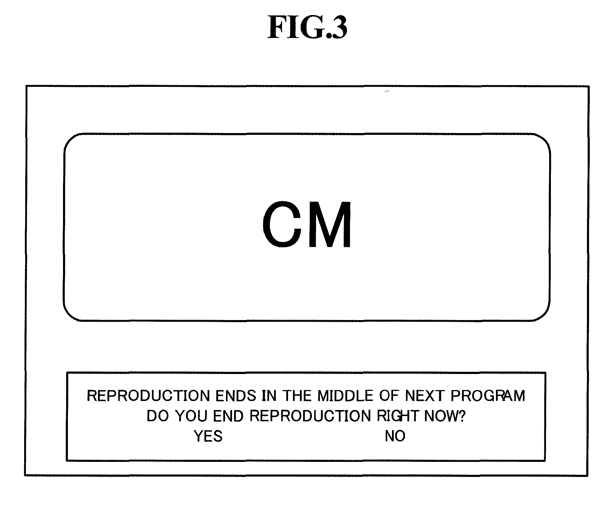

For example, the timer controller 11 reproduces a confirmation screen together with a CM as illustrated in FIG. 3 via the display 4. According to this confirmation screen, a message of "REPRODUCTION ENDS IN THE MIDDLE OF NEXT PROGRAM. DO YOU END REPRODUCTION RIGHT NOW?" is displayed, and "YES" or "NO" is selectable by the user. If the user inputs "YES" via the operator 6 or no operation input is made, for example, within 60 seconds after the reproduction of the confirmation screen, the timer controller 11 ends the reproduction carried out by the reproducer 9. On the other hand, when the user inputs "NO," the timer controller 11 continues the reproduction without being ended.

In the case where a time between a time when the reproducer 9 has detected a segment and a segment time within a set time is within a predetermined time, it is possible that the timer controller 11 commences end processing.

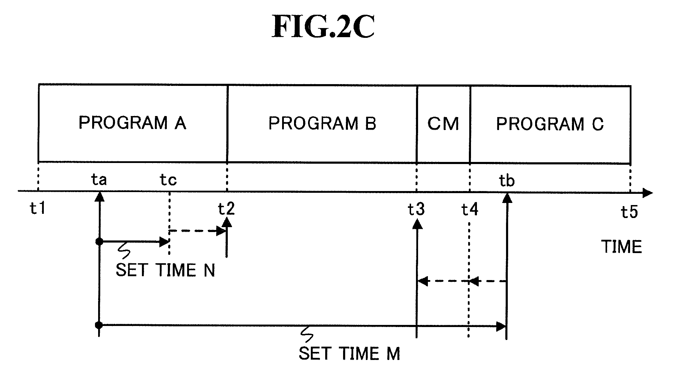

For example, as illustrated in FIG. 2C, when a CM is reproduced between a program B and a program C, it is thought that the commencement of end processing of reproduction at a segment time t3 for switching to the CM prior to a processing start time t4 is more advantageous than the commencement of end processing of reproduction at the processing start time t4 in the viewpoint of reducing power consumption. Therefore, a time between the segment time t3 notified from the reproducer 9 and the processing start time t4 has been, for example, at most 90 seconds, a length of a general CM, the timer controller 11 sets a processing start time to be t3. As a result, the processing for ending the reproduction carried out by the reproducer 9 is commenced at t3 further earlier than t4.

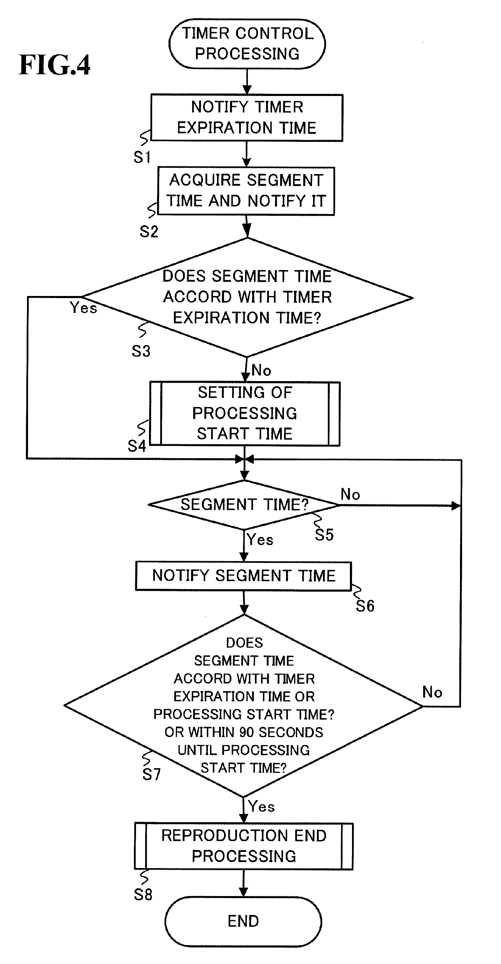

With reference to FIG. 4, a flow of timer control processing will be described. When the user inputs a set time, then the timer controller 11 notifies the time acquirer 10 of a timer expiration time (step S 1). In response thereto, the time acquirer 10 acquires a segment time to be notified to the timer controller 11 (step S2). When the segment time notified from the time acquirer 10 and the timer expiration time do not accord with each other (step S3; No), the timer controller 11 sets a processing start time (step S4).

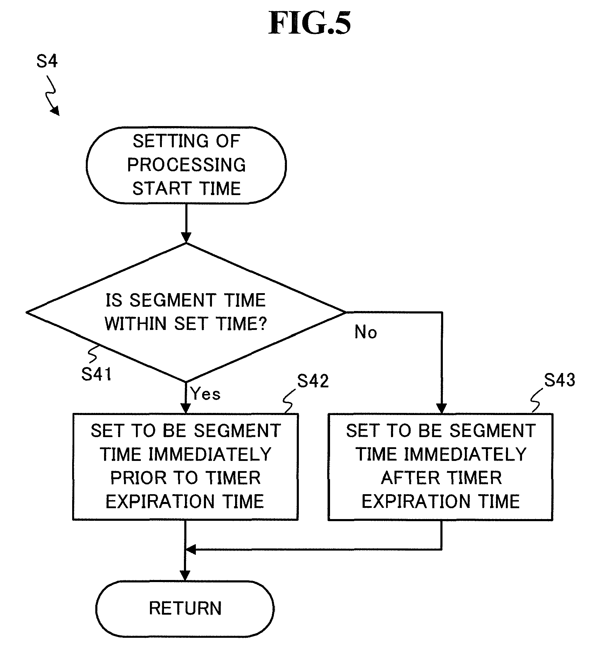

Next, with reference to FIG. 5, setting of the processing start time of step S4 will be described in detail. If the segment time notified from the time acquirer 10 is within the set time (step S41; Yes), the timer controller 11 sets the processing start time to be a segment time immediately prior to a timer expiration time (step S42).
Subsequently, the controller 8 returns and advances to step S5. On the other hand, if the segment time is not within the set time (step S41; No), the timer controller 11 sets the processing start time to be a segment time immediately after the timer expiration time (step S43). Then, the controller 8 ends the setting of the processing start time and further advances to step S5.

When the processing start time is set (step S4) or the segment time and the timer expiration time accord with each other (step S3; Yes), the reproducer 9 waits until the segment time comes (step S5; No). When the segment time has come (step S5; Yes), the reproducer 9 notifies the timer controller 11 of the segment time (step S6). If the thus-notified segment time accords with the timer expiration time or the processing start time, or there are at most 90 seconds until the processing start time (step S7; Yes), the timer controller 11 commences reproduction end processing (step S8). On the other hand, if the notified segment time accords with neither the timer expiration time nor the processing start time and also there are more than 90 seconds until the processing start time (step S7; No), the controller 8 returns to step S5.

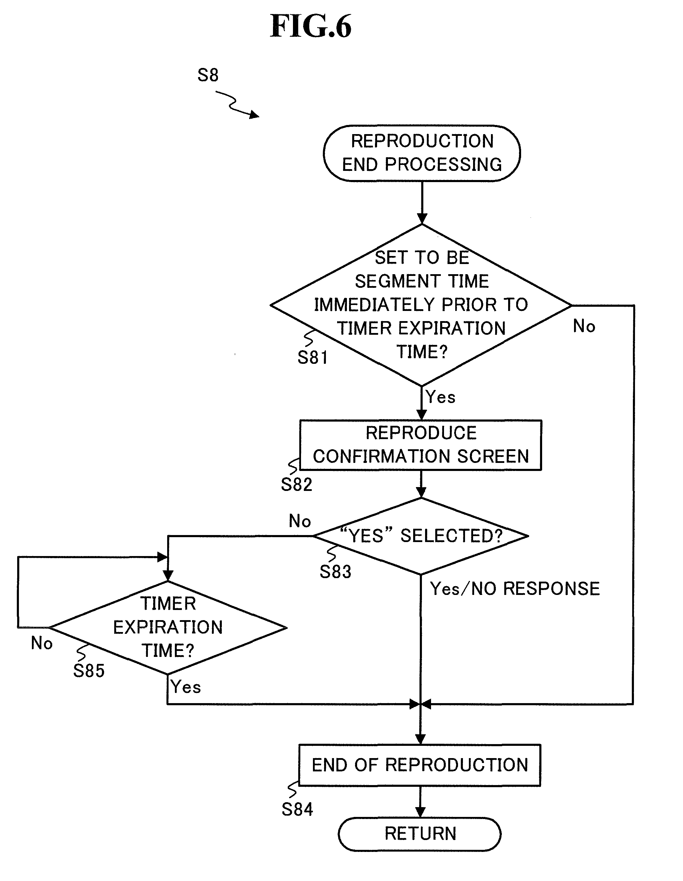

Next, with reference to FIG. 6, the reproduction end processing of step S8 will be described in detail. In step S4, when a processing start time has been adjusted at a segment time immediately prior to a timer expiration time (step S81; Yes), the timer controller 11 reproduces a confirmation screen to end reproduction via the display 4 (step S82). In the confirmation screen, when the user has selected "YES" or no response has been made within 60 seconds from the reproduction of the confirmation screen (step S83; Yes/no response), the timer controller 11 ends the reproduction carried out by the reproducer 9 (step S84).

On the other hand, when the user has selected "NO" (step S83; No), the timer controller 11 waits until the timer expiration time comes (step S85; No). When the timer expiration time has come (step S85; Yes), the timer controller 11 ends the reproduction carried out by the reproducer 9 (step S84).

If the processing start time has not been set to be the segment time immediately prior to the timer expiration time (step S81; No), in other words, a notified segment time and the timer expiration time have accorded with each other, or in step S4, if the processing start time has been set to be a segment time immediately after the timer expiration time, the timer controller 11 ends the reproduction of content (step S84). When the reproduction of content ends, then the controller 8 ends reproduction end processing and further timer control processing.

According to the reproduction device 100 of embodiment 1 described above, the reproduction of a program does not end in the middle and the reproduction ends earlier than a set time, resulting in that power consumption is further reduced without causing discomfort to the user.

Further, the timer controller 11 has been configured to reproduce a confirmation screen when end processing has commenced at a segment time within a set time and to end the reproduction carried out by the reproducer 9 when an operation input for ending the reproduction of a program has been made. Therefore, the timer controller 11 is able to flexibly cope with a case in which the user intends to continue reproducing the program.

Still further, the timer controller 11 has been configured to end the reproduction carried out by the reproducer 9 if no operation input has been made within 60 seconds from the reproduction of the confirmation screen. Therefore, even in cases where for example, since being sleeping or away from the reproduction device 100, the user has not noticed the confirmation screen, the timer controller 11 is able to end the reproduction of a program. As a result, the reproduction device 100 is able to further reduce power consumption.

### (Embodiment 2)

A reproduction device 200 according to embodiment 2 reproduces music files as content. The reproduction device 200 includes a play list function for reproducing music files in an order desired by the user. Further, the reproduction device 200 includes a timer function and ends the reproduction of music at a timer expiration time.

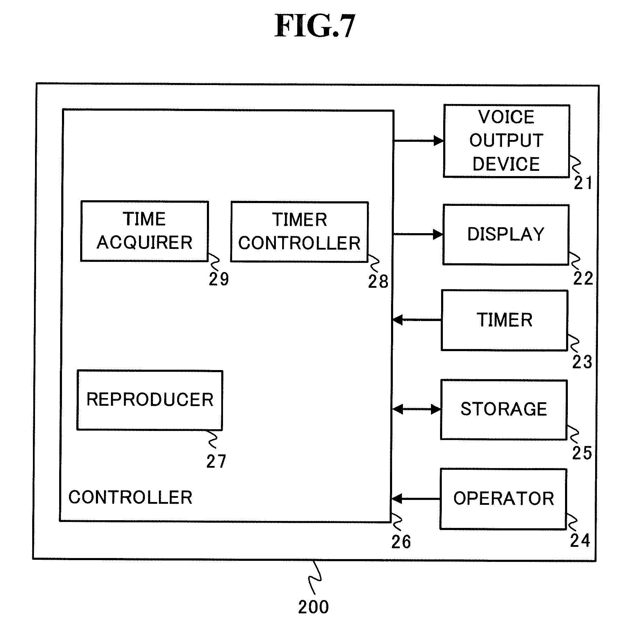

With reference to FIG. 7, a configuration of the reproduction device 200 according to the present embodiment will be described. The reproduction device 200 includes a voice output device 21, a display 22, a timer 23, an operator 24, a storage 25, and a controller 26. Each of these components has the same function as each component of the reproduction device 100 according to the first embodiment. Differences between the reproduction device 100 according to the first embodiment and the reproduction device 200 according to the present embodiment will be described in detail below.

The voice output device 21 outputs a voice from a speaker (not illustrated) based on a voice signal output from the controller 26.

The display 22 displays an image on a liquid crystal display (not illustrated) based on data output from the controller 26.

The storage 25 stores music files. Further, the storage 25 stores a play list and stores a music database accommodating start times and end times of music and others based on this play list.

The controller 26 produces a play list based on stored music files. The controller 26 causes the storage 25 to store a produced play list.

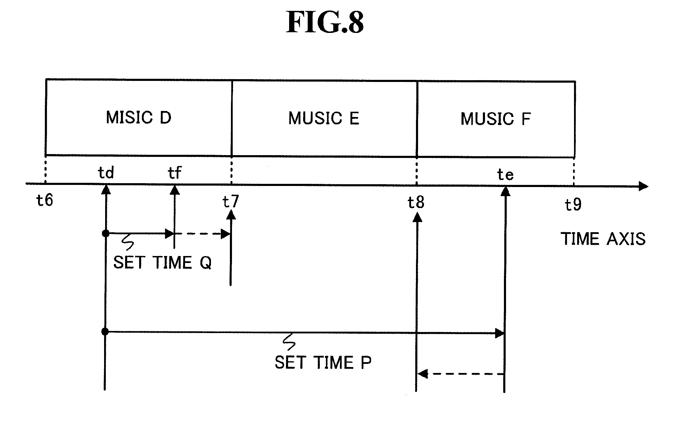

The controller 26 includes a reproducer 27, a time acquirer 28, and a timer controller 29. It is assumed that for example, using the play list function, as illustrated in FIG. 8, music D, music E, and music F are reproduced from a time t6 to a time t7, from a time t7 to a time t8, and from a time t8 to a time t9, respectively. And, the user is assumed to have input a set time P to the reproduction device 200 at a time td during viewing of music D. In this case, the timer controller 29 notifies the time acquirer 28 of a timer expiration time te specified by the set time P. In response thereto, the time acquirer 28 acquires segment times t8 and t9 of music F reproduced at te to be notified to the timer controller 29. Since the segment time t8 is within the set time P (td - te), the timer controller 29 sets a processing start time to be the segment time t8 immediately prior to the timer expiration time te. As a result, processing for ending the reproduction carried out by the reproducer 27 is commenced at the processing start time t8 earlier than the timer expiration time te.

On the other hand, when the user has input a set time Q (td - tf) to the reproduction device 200, the timer controller 29 notifies the time acquirer 28 of a timer expiration time tf. The time acquirer 28 acquires segment times t6 and t7 of music D reproduced at the timer expiration time tf to be notified to the timer controller 29. Since the segment times are not within the set time Q, the timer controller 29 sets a processing start time to be the segment time t7 immediately after the timer expiration time tf. As a result, processing for ending the reproduction carried out by the reproducer 27 is commenced at the processing start time t7 later than the timer expiration time tf.

When information for ending the reproduction of content is reproduced, it is also possible that the timer controller 29 outputs a confirmation voice for ending reproduction via, for example, the voice output device 21, instead of a confirmation screen. In response thereto, the user inputs "YES" or "NO" via the operator 24.

Timer control processing in the reproduction device 200 of the present embodiment will be described. The timer control processing in the present embodiment differs from the timer control processing in embodiment 1 described above in a point in which a confirmation voice for ending reproduction is reproduced instead of reproducing the confirmation screen at step S82. Processings other than these are the same as in the timer control processing in embodiment 1.

According to the reproduction device 200 of embodiment 2, the reproduction of music does not end in the middle and the reproduction ends earlier than a set time, resulting in that power consumption is further reduced without causing discomfort to the user.

Further, the timer controller 29 has been configured to reproduce a confirmation voice when end processing has commenced at a segment time within a set time and to end the reproduction carried out by the reproducer 27 when an operation input for ending the reproduction of music has been made. Therefore, the timer controller 29 is able to flexibly cope with a case in which the user intends to continue reproducing the music.

Still further, the timer controller 29 has been configured to end the reproduction carried out by the reproducer 27 if no operation input has been made within 60 seconds from the reproduction of the confirmation voice. Therefore, even in cases where for example, since being sleeping or away from the reproduction device 200, the user has not noticed the confirmation voice, it is possible to end the reproduction of music. As a result, the reproduction device 200 is able to further reduce power consumption.

### (Embodiment 3)

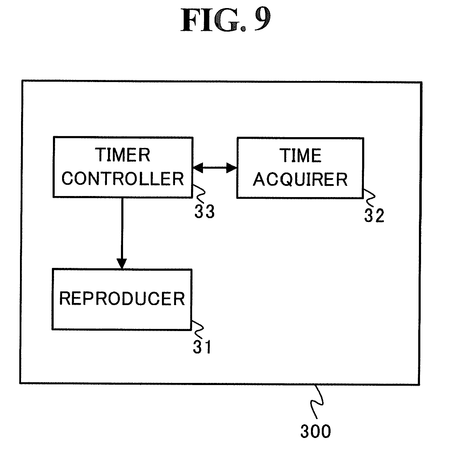

As illustrated in FIG. 9, a reproduction device 300 according to embodiment 3 includes a reproducer 31, a time acquirer 32, and a timer controller 33.

The reproducer 31 reproduces content. The time acquirer 32 acquires a segment time of content. If a segment time acquired by the time acquirer 32 is within a set time from a first time to a second time based on a timer setting, the timer controller 33 commences processing for ending the reproduction carried out by the reproducer 31 at the segment time.

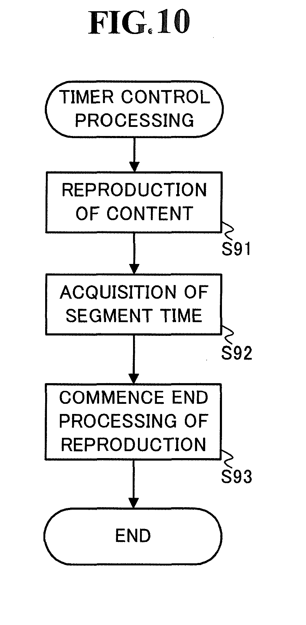

Next, with reference to FIG. 10, timer control processing in the reproduction device 300 of the present embodiment will be described.

The reproducer 31 reproduces content (step S91). The time acquirer 32 acquires a segment time of the content (step S92). If a segment time acquired by the time acquirer 32 is within a set time from a first time to a second time based on a timer setting, the timer controller 33 commences processing for ending the reproduction carried out by the reproducer 31 at the segment time (step S93).

As described in detail above, in each of the reproduction devices 100, 200, and 300 of the embodiments, the reproduction of content does not end in the middle and the reproduction ends earlier than a set time, resulting in that power consumption is further reduced without causing discomfort to the user.

Herein, the timer controllers 11 and 29 have been configured to end the reproduction carried out by the reproducers 9 and 27 if no operation input has been made within 60 seconds as a predetermined time from the reproduction of the confirmation screen and the confirmation voice, respectively. It is possible to set 30 seconds, 10 seconds, 1 minute, or others as this predetermined time and the time is settable by the user.

In embodiments 1 and 2, a time when the user has input a set time has been set to be a timer start time and a time after the elapse of the set time has been set to be a timer expiration time, but the timer start time and the timer expiration time are settable in advance. Further, it is possible that the reproduction devices 100 and 200 end the reproduction of content when a non-operated state has continued for a predetermined period of time.

In each of the embodiments, the reproduction of content has ended when the processing start time comes. However, without limitation thereto, it is also possible that when the processing start time comes, the reproduction device 100 and 200 are powered off.

In embodiment 1, the reproduction device 100 has been configured to reproduce programs of One Seg but is possibly configured to reproduce, as content, programs and CMs delivered by digital terrestrial television broadcasting using 12 segments (so-called Full Seg).

When a time between a time when the reproducer 9 and 27 have detected a segment and a segment time within a set time is within a predetermined time, the timer controllers 11 and 29 start end processing, respectively. However, this predetermined time is not limited to 90 seconds and possibly set to be 60 seconds, 30 seconds, 15 seconds, or others. Further, it is possible that the timer controller 11 sets a predetermined time based on information on a CM time zone specified from information included in a data broadcast signal delivered from a broadcast station.

Further, it is possible that the reproduction device 100 reproduces not only programs delivered by digital terrestrial television broadcasting but also recorded moving image content, moving image content on networks, moving image content recorded on a DVD (Digital Versatile Disc), and the like. Further, the timer controller 11 has been configured to reproduce a confirmation screen for ending reproduction via the display 4, but it is possible to reproduce a confirmation voice for ending reproduction via the voice output device 3 and also to reproduce the confirmation screen and the confirmation voice together.

It is possible that the reproduction device 200 carries out not only the reproduction of a stored music file but also the reproduction from a storage medium such as a CD (Compact Disc), a DVD, and the like and the reproduction of data on networks. Further, the timer controller 29 has been configured to output a confirmation voice for ending reproduction via the voice output device 21, but it is possible to display a confirmation message and the like on the display 22 and also to output the confirmation voice and display the confirmation message together.

Herein, the reproduction devices 100 and 200 are possibly mobile terminals, smart phones, PHSs (Personal Handy-phone Systems), PDAs (Personal Digital Assistants), PCs (Personal Computers), tablet PCs, notebook PCs, game machines, or the like.

It is possible that a program executed in the embodiments is stored in a computer readable recording medium such as a flexible disc, a CD-ROM (Compact Disc Read-Only Memory), a DVD, a MO (Magneto-Optical Disc), and the like to be distributed and then this program is installed to configure a system for executing the aforementioned processings.

Further, it is possible that a program is stored on a disc device or the like included in a certain server device on a communication network such as the Internet and the like and then, for example, downloaded by being overlapped with a carrier wave.

Still further, when the aforementioned functions are realized by sharing with an OS (Operating System) or by cooperation of the OS and applications, it is possible that only the portion other than the OS is stored in the aforementioned storage medium and distributed or, for example, downloaded.

In the present invention, various embodiments and modifications are possible without departing from the spirit and scope of the present invention in a broad sense. Further, the aforementioned embodiments must be considered as illustrative and not restrictive in the scope of the present invention. In other words, the scope of the present invention is shown not by the embodiments but by the scope of claim for patent. And, various modifications made within the scope of claim for patent and the scope of the meaning of an invention equivalent thereto are further considered within the scope of the present invention.

A part or all of the embodiments is possible to be described as in the following notes without limitation thereby.

### (Note 1)

A reproduction device including:
a reproducer for reproducing content;
a time acquirer for acquiring a segment time of the content; and
a timer controller for commencing processing for ending the reproduction carried out by the reproducer at the segment time acquired by the time acquirer if the segment time is within a set time extending from a first time to a second time based on a timer setting.

### (Note 2)

The reproduction device according to Note 1, wherein
the timer controller commences processing for ending the reproduction carried out by the reproducer at the segment time immediately prior to the second time if a plurality of the segment times acquired by the time acquirer are within the set time.

### (Note 3)

The reproduction device according to Note 1 or 2, wherein
the timer controller commences processing for ending the reproduction carried out by the reproducer at the segment time immediately after the second time unless the segment time acquired by the time acquirer is within the set time.

### (Note 4)

The reproduction device according to any one of Notes 1 to 3, wherein
the timer controller
reproduces information for ending the reproduction of the content together with the content when the end processing has been commenced at the segment time within the set time;
ends the reproduction carried out by the reproducer if an operation input for ending the reproduction of the content is made; and
ends the reproduction carried out by the reproducer unless the operation input is made within a predetermined time after reproduction of information for ending the reproduction of the content.

### (Note 5)

The reproduction device according to Note 4, wherein
the timer controller ends the reproduction carried out by the reproducer at the second time when an operation input for continuing the reproduction of the content is made.

### (Note 6)

The reproduction device according to any one of Notes 1 to 5, wherein
the reproducer detects a segment of the content; and
the timer controller commences the end processing when a time between a time when the reproducer has detected the segment and the segment time within the set time is within a predetermined time.

### (Note 7)

A reproduction method including:
a reproduction step of reproducing content;
a time acquisition step of acquiring a segment time of the content; and
a timer control step of commencing processing for ending the reproduction carried out in the reproduction step at the segment time acquired in the time acquisition step if the segment time is within a set time extending from a first time to a second time based on a timer setting.

### (Note 8)

A computer readable recording medium recording a program for causing
a computer to function as:
a reproducer for reproducing content;
a time acquirer for acquiring a segment time of the content; and
a timer controller for commencing processing for ending the reproduction carried out by the reproducer at the segment time acquired by the time acquirer if the segment time is within a set time extending from a first time to a second time based on a timer setting.

This application is based on Japanese Patent Application No. 2011-107403 filed on May 12, 2011, the specification, the scope of claim for patent, and the drawings of which are entirely incorporated herein by reference.

### Industrial Applicability

The present invention is applicable to various fields to realize a reproduction device of content capable of reducing power consumption without causing discomfort to the user, using an off-timer function.

### Reference Signs List

- 1: Tuner
- 2: Decoder
- 3, 21: Voice output device
- 4, 22: Display
- 5, 23: Timer
- 6, 24: Operator
- 7, 25: Storage
- 8, 26: Controller
- 9, 27, 31: Reproducer
- 10, 28, 32: Time acquirer
- 11, 29, 33: Timer controller
- 100, 200, 300: Reproduction device

## Claims

1. A reproduction device comprising:
a reproducer for reproducing content;
a time acquirer for acquiring a segment time of the content; and
a timer controller for commencing processing for ending the reproduction carried out by the reproducer at the segment time acquired by the time acquirer if the segment time is within a set time extending from a first time to a second time based on a timer setting.

2. The reproduction device according to Claim 1, wherein
the timer controller commences processing for ending the reproduction carried out by the reproducer at the segment time immediately prior to the second time if a plurality of segment times acquired by the time acquirer are within the set time.

3. The reproduction device according to Claim 1 or 2, wherein
the timer controller commences processing for ending the reproduction carried out by the reproducer at the segment time immediately after the second time unless the segment time acquired by the time acquirer is within the set time.

4. The reproduction device according to any one of Claims 1 to 3, wherein the timer controller
reproduces information for ending the reproduction of the content together with the content when the end processing has been commenced at the segment time within the set time;
ends the reproduction carried out by the reproducer if an operation input for ending the reproduction of the content is made; and
ends the reproduction carried out by the reproducer unless the operation input is made within a predetermined time after reproduction of information for ending the reproduction of the content.

5. The reproduction device according to Claim 4, wherein
the timer controller ends the reproduction carried out by the reproducer at the second time when an operation input for continuing the reproduction of the content is made.

6. The reproduction device according to any one of Claims 1 to 5, wherein
the reproducer detects a segment of the content; and
the timer controller commences the end processing if a time between a time when the reproducer has detected the segment and the segment time within the set time is within a predetermined time.

7. A reproduction method comprising:
a reproduction step of reproducing content;
a time acquisition step of acquiring a segment time of the content; and
a timer control step of commencing processing for ending the reproduction carried out in the reproduction step at the segment time acquired in the time acquisition step if the segment time is within a set time extending from a first time to a second time based on a timer setting.

8. A computer readable recording medium recording a program for causing a computer to function as:
a reproducer for reproducing content;
a time acquirer for acquiring a segment time of the content; and
a timer controller for commencing processing for ending the reproduction carried out by the reproducer at the segment time acquired by the time acquirer if the segment time is within a set time extending from a first time to a second time based on a timer setting.
